# EUROPÄISCHE PATENTSCHRIFT

(11) **EP 0 731 762 B1**
(45) Veröffentlichungstag und Bekanntmachung des Hinweises auf die Patenterteilung: **28.05.1997**
(21) Anmeldenummer: 95902049.6
(22) Anmeldetag: 06.12.1994
(51) Int. Cl.: B60T 8/42, B60T 8/26, B60T 13/58

(54) **BREMSANLAGE MIT BLOCKIERSCHUTZEINRICHTUNG FÜR EIN STRASSENFAHRZEUG, INSBESONDERE PERSONENKRAFTWAGEN**
BRAKE DEVICE WITH AN ANTILOCK SYSTEM FOR A ROAD VEHICLE, IN PARTICULAR A PASSENGER CAR
DISPOSITIF DE FREINAGE A SYSTEME ANTIBLOCAGE POUR VEHICULE ROUTIER, NOTAMMENT POUR VOITURE DE TOURISME

(30) Priorität: 16.12.1993 DE 4342918
(43) Veröffentlichungstag der Anmeldung: 18.09.1996
(73) Patentinhaber: ROBERT BOSCH GMBH, 70442 Stuttgart (DE)
(72) Erfinder: SAGER, Frank, Farmington Hills, MI 48331 (US)
(74) Vertreter: Knetsch, Manfred
(86) Internationale Anmeldenummer: DE9401442
(87) Internationale Veröffentlichungsnummer: WO9516592

(56) Entgegenhaltungen:
- EP-A- 0 253 157
- EP-A- 0 260 046
- DE-A- 3 545 800
- GB-A- 2 151 731
- US-A- 4 875 741
- US-A- 4 917 445
- US-A- 5 163 743
- US-A- 5 234 262

## Beschreibung

### Stand der Technik

Die Erfindung geht aus von einer Bremsanlage nach der Gattung des Patentanspruchs. Eine solche Bremsanlage ist schon bekannt (US-A-5 234 262), bei der die Druckmodulatoren bei Blockierschutzbetrieb mittels eines Kolbens sowohl auf ein Schließglied eines Rückschlagventils in der jeweiligen Bremsleitung einwirken als auch das Volumen eines Zylinderraumes für die Aufnahme von der zugeordneten Radbremse entnommenem Druckmittel verändern. Die Druckmodulatoren weisen jeweils einen Elektromotor auf, der über einen Schraubspindeltrieb den Kolben in beiden Richtungen verschiebt. Diese bekannte Ausführungsform erfordert einen relativ hohen Aufwand für die Druckmodulatoren sowie die Steuerung des Motorstromes. Außerdem ist die Dynamik der Blockierschutzregelung durch die Trägheit des Kolbenantriebs vermindert.

Eine aus EP-A-253 157 bekannte Bremsanlage mit Blockierschutzeinrichtung hat einen zwischen einem Hauptbremszylinder und einer Radbremse angeordneten Druckmodulator, bestehend aus einer elektromotorisch angetriebenen Pumpe und einem parallelgeschalteten, elektromagnetisch betätigten Ventil. Bei einer Blockierschutzregelung fördert die Pumpe Druckmittel von der Radbremse zum Hauptbremszylinder, während das umgeschaltete Ventil den Druckmittelstrom zum Hauptbremszylinder zur Radbremse begrenzt.

### Aufgabe und Lösung der Erfindung

Der Erfindung liegt die Aufgabe zugrunde, bei der eingangs erwähnten Bremsanlage eine den Radbremsen der Vorderachse zugeordnete Blockierschutzeinrichtung einfachen Aufbaus auszubilden und die Wirkung der Radbremsen der Bremsanlage zu überwachen.

Diese Aufgabe wird mit den im Anspruch gekennzeichneten Merkmalen gelöst.

### Vorteile der Erfindung

Die erfindungsgemäße Bremsanlage mit den kennzeichnenden Merkmalen des Patentanspruchs hat demgegenüber den Vorteil, daß sie kostengünstiger ausgebildet sein kann als diejenige nach dem Stand der Technik, aber dennoch den Anforderungen an eine Bremsanlage für kleine und somit leichte Fahrzeuge mit Vorderachsantrieb genügt. Darüberhinaus weist die erfindungsgemäße Bremsanlage eine hohe Dynamik auf, da das Absperrventnil sehr kurze Schaltzeiten hat und die Pumpe bei Blockierschutzbetrieb ständig eingeschaltet ist. Der Steueraufwand für die Blockierschutzeinrichtung ist demgemäß gering. Aufgrund der Überwachung der Radbremsen mit Sensoren kann das die Sensorsignale auswertende Steuergerät die Wirkung der Radbremsen entsprechend der Pedalbetätigung regeln.

### Zeichnung

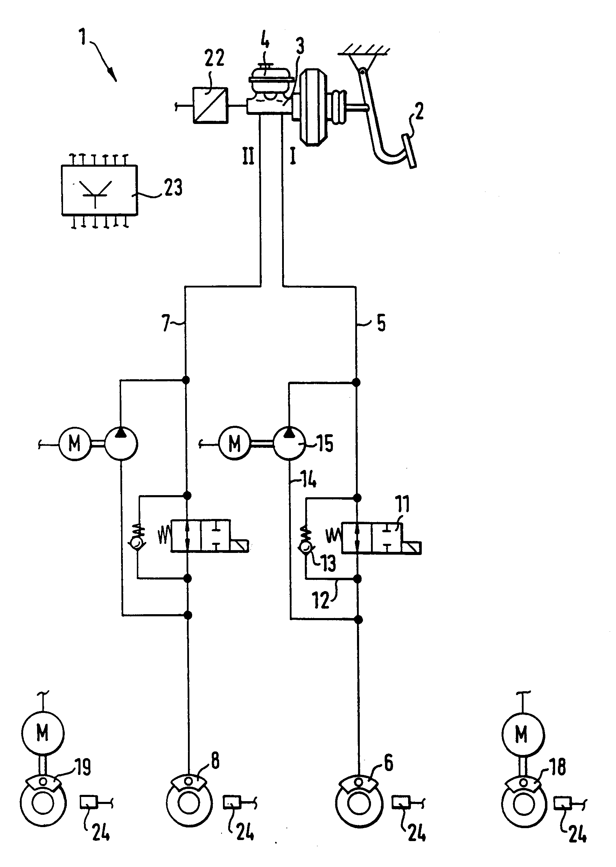

Ein Ausführungsbeispiel der Erfindung ist in der Zeichnung bei einer Bremsanlage mit hydraulischer Betätigung an der Vorderachse und elektrischer Betätigung an der Hinterachse schematisch dargestellt und in der nachfolgenden Beschreibung näher erläutert.

### Beschreibung des Ausführungsbeispiels

Die in der Zeichnung dargestellte Bremsanlage 1 ist auf die Verwendung in einem leichten, frontgetriebenen Personenkraftwagen abgestimmt. Sie weist ein sowohl elektrisches als auch hydraulisches Betriebsbremssystem auf. Außerdem ist die Bremsanlage 1 mit einer Einrichtung für die Bremsschlupfregelung versehen.

Im einzelnen hat die Bremsanlage 1 einen mit einem Bremspedal 2 betätigbaren, zweikreisigen Hauptbremszylinder 3 mit einem Druckmittel-Vorratsbehälter 4. Vom Hauptbremszylinder 3 führt im Bremskreis I eine Bremsleitung 5 zu einer hydraulischen Radbremse 6, welche dem nicht dargestellten rechten Vorderrad des Fahrzeugs zugeordnet ist. Der Bremskreis II hat eine Bremsleitung 7, die mit der hydraulischen Radbremse 8 des gleichfalls nicht dargestellten linken Fahrzeug-Vorderrades in Verbindung steht. Das hydraulische Betriebsbremssystem ist somit der Vorderachse des Fahrzeugs zugeordnet.

Die beiden Bremskreise I und II des hydraulischen Betriebsbremssystems sind identisch ausgebildet; nachfolgend wird daher der Bremskreis I naher beschrieben.

In der Bremsleitung 5 liegt zwischen dem Hauptbremszylinder 3 und der Radbremse 6 ein als Absperrventil 11 dienendes 2/2-Wegeventil mit federbetätigter Durchlaßstellung und elektromagnetisch betätigter Sperrstellung. Das Absperrventil 11 ist von einer Leitung 12 umgangen, in der ein Rückschlagventil 13 mit Durchlaßrichtung von der Radbremse 6 zum Hauptbremszylinder 3 angeordnet ist. Das Absperrventil 11 ist von einer zweiten Leitung 14 umgangen, in welcher sich eine von der Radbremse 6 zum Hauptbremszylinder 3 fördernde, elektromotorisch antreibbare Pumpe 15 für Druckmittel befindet. Das elektrische Betriebsbremssystem der Bremsanlage 1 ist dagegen der Hinterachse des Fahrzeugs zugeordnet. Es weist eine elektrische Radbremse 18 für das nicht gezeichnete rechte Hinterrad und eine elektrische Radbremse 19 für das gleichfalls nicht dargestellte linke Hinterrad des Fahrzeugs auf. Die beiden Radbremsen 18 und 19 besitzen gleichen Aufbau und sind durch Motorantrieb betätigbar. Dabei kann die Spanneinrichtung zwischen dem Motorantrieb und der Radbremse mechanisch oder hydraulisch ausgebildet sein. Zu dem elektrischen Betriebsbremssystem gehört auch ein pedalbetätigungsabhängig einen elektrischen Sollwert abgebender Bremswertgeber 22. Dieser steht mit einem elektronischen Steuergerät 23 der Bremsanlage 1 in Verbindung. Der Motorantrieb der elektrischen Radbremsen 18 und 19 ist an das elektronische Steuergerät 23 angeschlossen. Außerdem sind den Radbremsen 6, 8, 18 und 19 Sensoren 24 zugeordnet, mit denen an allen Fahrzeugrädern das Raddrehverhalten, die Bremswirkung und/oder die Bremskraft sowie an den hydraulischen Radbremsen 6 und 8 der Bremsdruck sensierbar ist.

Die Sensoren 24 sind ebenfalls an das elektronische Steuergerät 23 angeschlossen. Gleichfalls angeschlossen sind die beiden Absperrventile 11 und der elektromotorische Antrieb der beiden Pumpen 15 in den Bremskreisen I und II. Sie bilden in Verbindung mit dem Steuergerät 23 und den Sensoren 24 eine Blockierschutzeinrichtung.

Bei einer Bremsung des Fahrzeugs durch Betätigen des Bremspedals 2 wird im Hauptbremszylinder 3 Bremsdruck erzeugt und durch die Bremsleitungen 5 und 7 in die hydraulischen Radbremsen 6 und 8 eingesteuert. Bei einer Bremsung ohne Blockiergefahr nehmen die Absperrventile 11 beider Bremskreise I und II die gezeichnete Durchlaßstellung ein. Die Pumpen 15 sind dabei nicht angetrieben. Bei der Bremsung wird zugleich pedalbetätigungsabhängig vom Bremswertgeber 22 ein elektrischer Sollwert gebildet, aufgrund dem das elektronische Steuergerät 23 den Motorantrieb der beiden elektrischen Radbremsen 18 und 19 ansteuert. Das Steuergerät 23 überwacht mit Hilfe der Sensoren 24 an den Radbremsen 6, 8, 18 und 19 das Raddrehverhalten und die Bremswirkung und/oder die Bremskraft und/oder an den hydraulischen Radbremsen 6 und 8 den Bremsdruck. Das elektronische Steuergerät 23, welches den Sollwert des Bremswertgebers 22 mit den Signalen der Sensoren 24 logisch verknüpft, greift steuernd in den Motorantrieb der elektrischen Radbremsen 18 und 19 ein, um beispielsweise die Bremskraftverteilung zwischen Vorderachse und Hinterachse zu beeinflussen oder um drohendes Radblockieren an der hinteren Achse zu vermeiden. Tritt dagegen an der Vorderachse, beispielsweise an der hydraulischen Radbremse 6 zugeordneten Fahrzeugrad unzulässig großer Bremsschlupf auf, so schaltet das Steuergerät 23 das Absperrventil 11 in der Bremsleitung 5 in die Sperrstellung und setzt die Pumpe 15 des Bremskreises I in Betrieb. Das Absperrventil 11 und die Pumpe 15 bilden einen Druckmodulator, mit dem der Bremsdruck in der Radbremse 6 durch Rückförderung von Druckmittel zum Hauptbremszylinder 3 vermindert wird. Wenn sich das Raddrehverhalten stabilisiert, wird bei eingeschalteter Pumpe 15 das Absperrventil 11 in die Durchlaßstellung geschaltet, so daß vom Hauptbremszylinder 3 her ein Druckaufbau in der Radbremse 6 erfolgen kann. Es findet also eine Zwei-Gradienten-Druckregelung (Sägezahnregelung) statt. Durch ein auf die Förderleistung der Pumpe 15 abgestimmtes Takten des Absperrventils 11 läßt sich bei der Bremsschlupfregelung auch ein angenähertes Druckhalten in der Radbremse 6 erzielen. Bei stabilem Raddrehverhalten schaltet das Steuergerät 23 die Pumpe 15 des Bremskreises I ab sowie das Absperrventil 11 in seine Durchlaßstellung.

## Patentansprüche

1. Bremsanlage (1) mit Blockierschutzeinrichtung eines Straßenfahrzeugs, insbesondere eines Personenkraftwagens,
- mit einem einer Vorderachse des Straßenfahrzeugs zugeordneten hydraulischen Betriebsbremssystem mit einem pedalbetätigten, zweikreisigen Hauptbremszylinder (3), der durch Bremsleitungen (5, 7) mit in zwei Bremskreisen (I, II) angeordneten hydraulischen Radbremsen (6, 8) der Vorderachse in Verbindung steht,
- mit den hydraulischen Radbremsen (6, 8) in jedem Bremskreis (I, II) zugeordneten Druckmodulatoren (11, 15),
- mit einem einer Hinterachse des Straßenfahrzeugs zugeordneten elektrischen Betriebsbremssystem mit durch Elektromotoren betätigbaren Radbremsen (18, 19),
- mit einem Bremswertgeber (22) zum pedalbetätigungsabhängigen Erzeugen eines elektrischen Sollwertes für die Betätigung der elektrischen Radbremsen (18, 19),
- mit einem Sensor (24) pro Rad zum Sensieren des Raddrehverhaltens
- und mit einem elektronischen Steuergerät (23), an welches der Bremswertgeber (22), die Elektromotoren, die Sensoren (24) und die Druckmodulatoren (11, 15) angeschlossen sind, um entsprechend dem elektrischen Sollwert des Bremswertgebers (22) die Elektromotoren sowie in Abhängigkeit vom Raddrehverhalten die Druckmodulatoren (11, 15) und die Elektromotoren anzusteuern,
gekennzeichnet durch die Merkmale:
- in der zu einer hydraulischen Radbremse (6, 8) der Vorderachse führenden Bremsleitung (5, 7) des jeweiligen Bremskreises (I, II) ist ein elektromagnetisch betätigtes Absperrventil (11) angeordnet, welches stromlos seine Durchlaßstellung einnimmt,
- das Absperrventil (11) ist von einer Leitung (14) umgangen, in welcher sich eine während einer Blockierschutzregelung ständig Druckmittel von der hydraulischen Radbremse (6, 8) zum Hauptbremszylinder (3) fördernde Pumpe (15) befindet,
- das Absperrventil (11) und die Pumpe (15) bilden jeweils einen der Druckmodulatoren,
- das Absperrventil (11) wird zum Druckabbau in seine Sperrstellung und zum Druckaufbau in seine Durchlaßstellung geschaltet sowie zu einem angenäherten Druckhalten auf die Förderleistung der Pumpe (15) abgestimmt getaktet,
- die Sensoren (24) sind auch für das Sensieren der Bremswirkung und/oder der Bremskraft sowie des Bremsdrucks an den hydraulischen Radbremsen (6, 8) ausgebildet,
- das Steuergerät (23) überwacht mit Hilfe der Sensoren (24) die Bremswirkung und/oder die Bremskraft an allen Radbremsen (6, 8, 18, 19) und/oder den Bremsdruck an den hydraulischen Radbremsen (6, 8).

## Claims

1. Brake system (1) having an antilock device for a road vehicle, in particular a passenger car,
- having a hydraulic service brake system which is assigned to a front axle of the road vehicle and has a pedal-actuated, two-cylinder master brake cylinder (3) which is connected by brake lines (5, 7) to hydraulic wheel brakes (6, 8) on the front axle which are arranged in two brake circuits (I, II),
- having pressure modulators (11, 15) which are assigned to the hydraulic wheel brakes (6, 8) in each brake circuit (I, II),
- having an electric service brake system which is assigned to a rear axle of the road vehicle and has wheel brakes (18, 19) which can be actuated by electric motors,
- having a brake value transmitter (22) for generating a desired electrical value, in dependence on the actuation of the pedal, for the actuation of the electric wheel brakes (18, 19),
- having one sensor (24) per wheel for sensing the wheel rotation characteristics
- and having an electronic control unit (23) to which the brake value transmitter (22), the electric motors, the sensors (24) and the pressure modulators (11, 15) are connected, in order to drive the electric motors in accordance with the desired electrical value of the brake value transmitter (22) and to drive the pressure modulators (11, 15) and the electric motors as a function of the wheel rotation behaviour,
characterized by the features:
- in the brake line (5, 7), leading to a hydraulic wheel brake (6, 8) of the front axle, of the respective brake circuit (I, II) an electromagnetically actuated shut-off valve (11) is arranged, which shut-off valve (11) assumes its flow position when de-energized,
- the shut-off valve (11) is bypassed by a line (14) in which there is a pump (15) which continuously feeds pressure medium from the hydraulic wheel brake (6, 8) to the master brake cylinder (3) during antilock control,
- the shut-off valve (11) and the pump (15) each form one of the pressure modulators,
- the shut-off valve (11) is switched into its blocking position to reduce pressure and into its flow position to increase pressure and its clocking is set first to approximately maintain the pressure on the output of the pump (15),
- the sensors (24) are also designed to sense the braking effect and/or the braking force as well as the brake pressure at the hydraulic wheel brakes (6, 8),
- the control unit (23) monitors, with the aid of the sensors (24), the braking effect and/or the braking force at all the wheel brakes (6, 8, 18, 19) and/or the brake pressure at the hydraulic wheel brakes (6, 8).

## Revendications

1. Installation de frein (1) équipée d'une installation anti-patinage pour un véhicule routier, notamment un véhicule de tourisme comprenant :
- un système de frein de fonctionnement, hydraulique associé à l'essieu avant du véhicule, comprenant un maître-cylindre de £rein (3) à deux circuits, commandé par une pédale, et relié par des conduites de frein (5, 7) à deux freins de roue (6, 8) hydrauliques, de l'essieu avant prévues dans deux circuits de frein (I, II),
- des modulateurs de pression (11, 15) associés aux freins de roue hydrauliques (6, 8) dans chaque circuit de frein (I, II),
- un système de frein de fonctionnement électrique associé à l'essieu arrière du véhicule, et ayant des freins de roue (18, 19) commandés par des moteurs électriques,
- un générateur de valeur de freinage (22) pour générer en fonction de l'actionnement de la pédale, une valeur de consigne électrique pour actionner les freins de roue électriques (18, 19),
- un capteur (24) par roue pour détecter le comportement en rotation des roues,
- et un appareil de commande électronique (23) auquel sont reliés le générateur de valeur de freinage (22), les moteurs électriques, les capteurs (24) et les modulateurs de pression (11, 15), pour commander les moteurs électriques en fonction de la valeur de consigne électrique du générateur de valeur de frein (22), , les modulateurs de pression (11, 15) ainsi que les moteurs électriques, et en fonction du comportement en rotation de roue,
caractérisée en ce que
- la conduite de frein (5, 7) du circuit de frein (I, II) respectif, relié aux freins de roue (6, 8) de l'essieu avant, comporte une vanne d'arrêt (11) à commande électromagnétique, passante lorsqu'elle n'est pas alimentée électriquement,
- la vanne d'arrêt (11) est contournée par une conduite (14) équipée d'une pompe qui, pendant une régulation antiblocage, débite en permanence du fluide sous pression du frein de roue hydraulique (6, 8) vers le maître-cylindre de frein (3),
- la vanne d'arrêt (11) et la pompe (15) forment chaque fois l'un des modulateurs de pression,
- la vanne d'arrêt (11) est commutée dans sa position de fermeture pour diminuer la pression et dans sa position passante pour établir la pression et sa commande en cadence pour avoir un comportement en pression approché du débit de la pompe (15),
- les capteurs (24) sont également prévus pour détecter l'effet de freinage et/ou la force de freinage de même que la pression de freinage dans les freins de roue hydrauliques (6, 8),
- l'appareil de commande (23) surveille à l'aide des capteurs (24), l'effet de freinage et/ou la force de freinage dans tous les freins de roue (6, 8, 18, 19) et/ou la pression de freinage dans les freins de roue hydrauliques (6, 8).
